# EUROPEAN PATENT SPECIFICATION

(11) **EP 4 544 160 B1**
(45) Date of publication and mention of the grant of the patent: **16.09.2026**
(21) Application number: 22758584.1
(22) Date of filing: 27.06.2022
(51) Int. Cl.: F01P 11/02, B04C 5/04, H01M 8/04029, F01P 11/18, B01D 19/00, H01M 8/04044

(54) **DEGASSING SYSTEM FOR VEHICLE COOLING SYSTEM**
ENTGASUNGSSYSTEM FÜR FAHRZEUGKÜHLSYSTEM
SYSTÈME DE DÉGAZAGE POUR SYSTÈME DE REFROIDISSEMENT DE VÉHICULE

(43) Date of publication of application: 30.04.2025
(73) Proprietor: VOLVO TRUCK CORPORATION, 405 08 Göteborg (SE)
(72) Inventor: HULTHÉN, Rikard, 44460 Stora Höga (SE); KLOSTERMANN, André Luís, 423 42 Torslanda (SE)
(74) Representative: Zacco Sweden AB
(86) International application number: PCT/IB2022/055958
(87) International publication number: WO 2024/003592

(56) References cited:
- EP-A1- 0 726 386
- EP-A1- 0 768 452
- DE-A1- 102010 009 757
- DE-A1- 4 219 892
- FR-A1- 2 905 737
- US-A1- 2019 312 290

## Description

### FIELD

Embodiments relate to vehicle cooling systems, and more particularly to a degassing system for a vehicle cooling system, such as a fuel cell stack (FCS) vehicle, and related systems, devices, and methods.

### BACKGROUND

Fuel cell stack (FCS) vehicles and other types of vehicles may employ a degassing system for separating trapped air bubbles and other gasses from a cooling fluid during operation of a cooling system of the vehicle. In a closed loop cooling system, air and other gasses are undesirable and may reduce system performance. Excess gas is typically removed after filling the system with cooling fluid, but air and other gasses can still build up over time, due to seepage or dissolved gasses in the cooling fluid forming air bubbles for example. In some conventional systems, the cooling fluid is sent through a tank at the highest position of the cooling system, where gas bubbles in the fluid can be separated due to gravity and removed from the cooling system. However, a gravity-based arrangement positioned at the highest point in the system places design constraints on the positioning of the degassing system in the system. Thus, there is a need for an improved degassing system with fewer constraints on positioning within the cooling system.
US2019312290A1 relates to a humidifying and cooling apparatus for a fuel cell, and more particularly, to a humidifying and cooling apparatus for a fuel cell for actively and effectively performing a cooling and a humidification control of supplied air, when high-humidity air is supplied to a fuel cell stack in an air supplying apparatus for a fuel cell for supplying an appropriate humidity to the fuel cell stack.
EP0726386A1 discloses a tank consisting of two communicating compartments, the first having a wall with an inner cylindrical surface and at least one tangential inlet at the top to centrifuge the incoming liquid, while the second has an outlet at the bottom for the degassed liquid and a partition to damp the swirling motion of the liq. The two compartments communicate with one other through apertures at the bottom of the first compartment. The second compartment has a cylindrical wall lying coaxially with the first compartment, and two hemispherical ends. The tank is made from a moulded plastic such as translucent polypropylene with graduations on its outer surface to allow the liquid level to be monitored.
EP0768452A1 discloses a guide having a cooler with at least one water tank, as well as an inlet side for heated coolant from the engine, and an outlet side for cooled coolant. An equalisation tank has a flow connection to the cooler, and a vehicle heater is arranged on forward and return flow pipes. The cooler and / or the engine block can be bled. The bleeding of the coolant in the engine block takes place via the forward flow pipe of the heater, and a bleed opening in this pipe opens into the equalisation tank, and / or the water tank. The forward flow pipe passes through the equalisation tank and the inlet and outlet sides are located in the region of the water tank.
FR2905737A1 discloses a method that involves transferring coolant into an adiabatic storage tank when an internal combustion engine is hot. The coolant from the tank is successively filled in an internal cooling circuit of the engine, a heater radiator of a vehicle heating circuit and a cooling radiator of the engine before cold starting of the engine, where the coolant from the circuit is degassed before being sent to remaining parts of the cooling circuit.
DE102010009757A1 discloses a vehicle cooling circuit that has a cooling medium that is circulated in the vehicle cooling circuit by a cooling medium pump. A vehicle drive motor is cooled by the cooling medium. A heat-generating element is provided in the vehicle cooling circuit. An additional chamber with a compensating air volume is connected with a working fluid container in a flow-conducting manner, in order to supply the compensating air volume of an air chamber of the working fluid container with working medium immediately before, during or after filling of a working chamber of retarder.
DE4219892A1 discloses a system for a fluid-cooled engine with heat exchanger, circulation pump, and a compensator reservoir. This is partially filled with a cooling fluid, and is connected to the cooling circuit. The reservoir has a filler socket, and an excess/under pressure valve, to connect atmosphere and air volume in the reservoir. A second compensator reservoir contains an additional air volume and is connected to the air space of the first reservoir via a line. The second reservoir is available, when an excess pressure in the first reservoir is exceeded, which is smaller than the opening value of the excess pressure valve. The line contains a pressure limitation valve.

### SUMMARY

According to the invention, a degassing system as defined in claim 1 and a method of degassing a cooling fluid as defined in claim 9 are provided.

According to some embodiments, a cooling system for a vehicle includes a hydrogen fuel cell and a first radiator. The cooling system further includes a plurality of cooling fluid lines for carrying a cooling fluid between the hydrogen fuel cell and the first radiator. The cooling system further includes a degassing system coupled to at least one of the plurality of cooling fluid lines. The degassing system is located vertically below the first radiator. The degassing system includes a cooling fluid inlet for receiving cooling fluid from a cooling fluid line of a vehicle cooling system. The degassing system further includes a degassing chamber for degassing the cooling fluid to remove gas from the cooling fluid. The degassing system further includes a cooling fluid outlet for returning the degassed cooling fluid to the cooling fluid line. The degassing system further includes a gas outlet for venting the removed gas from the degassing chamber.

### ASPECTS

According to an aspect, a degassing system for a vehicle cooling system includes a cooling fluid inlet for receiving cooling fluid from a cooling fluid line of a vehicle cooling system. The degassing system further includes a degassing chamber for degassing the cooling fluid to remove gas from the cooling fluid. Movement of the cooling fluid within the degassing chamber causes the gas to be separated from the cooling fluid. The degassing system further includes a cooling fluid outlet for returning the degassed cooling fluid to the cooling fluid line. The degassing system further includes a gas outlet for venting the removed gas from the degassing chamber.

According to another aspect, the degassing chamber including a swirl pot including a round interior wall. The cooling fluid inlet directs the cooling fluid horizontally toward the round interior wall such that inertia of the cooling fluid causes the cooling fluid to move around the round interior wall in a vortex to press the cooling fluid against the round interior wall. The pressure of the cooling fluid against the round interior wall causes the gas to move toward a center of the degassing chamber.

According to another aspect, the cooling fluid outlet is located vertically below the cooling fluid inlet.

According to another aspect, the gas outlet is located above the cooling fluid inlet.

According to another aspect, the cooling fluid inlet includes a pair of cooling fluid inlets disposed at opposite sides of a round interior wall. The pair of cooling fluid inlets direct the cooling fluid horizontally toward the round interior wall such that inertia of the cooling fluid causes the cooling fluid to move in the same direction around the round interior wall.

According to another aspect, the vehicle cooling system includes a hydrogen fuel cell cooling system.

According to another aspect, the degassing system further includes a pressure equalization chamber adjacent the degassing chamber. The degassing system further includes a gas inlet for receiving a pressurized gas at a constant pressure. The degassing system further includes a movable barrier separating the degassing chamber and the pressure equalization chamber for equalizing a pressure of the cooling fluid in the degassing chamber with the constant pressure of the pressurized gas in the pressure equalization chamber.

According to another aspect, the moveable barrier is a bellows.

According to another aspect, the moveable barrier is a flexible membrane.

According to an aspect, a cooling system for a vehicle includes a hydrogen fuel cell and a first radiator. The cooling system further includes a plurality of cooling fluid lines for carrying a cooling fluid between the hydrogen fuel cell and the first radiator. The cooling system further includes a degassing system coupled to at least one of the plurality of cooling fluid lines. The degassing system is located vertically below the first radiator. The degassing system includes a cooling fluid inlet for receiving cooling fluid from a cooling fluid line of a vehicle cooling system. The degassing system further includes a degassing chamber for degassing the cooling fluid to remove gas from the cooling fluid. The degassing system further includes a cooling fluid outlet for returning the degassed cooling fluid to the cooling fluid line. The degassing system further includes a gas outlet for venting the removed gas from the degassing chamber.

According to another aspect, the cooling system further includes a second radiator. The plurality of cooling fluid lines further carry the cooling fluid between the hydrogen fuel cell and the second radiator.

According to another aspect, the degassing system is located vertically below the second radiator.

According to another aspect, the degassing chamber includes a swirl pot comprising a round interior wall. The cooling fluid inlet directs the cooling fluid horizontally toward the round interior wall such that inertia of the cooling fluid causes the cooling fluid to move around the round interior wall in a vortex to press the cooling fluid against the round interior wall. The pressure of the cooling fluid against the round interior wall causes the gas to move toward a center of the degassing chamber.

According to another aspect, the cooling fluid outlet is located vertically below the cooling fluid inlet.

According to another aspect, the gas outlet is located above the cooling fluid inlet.

According to another aspect, the cooling fluid inlet comprises a pair of cooling fluid inlets disposed at opposite sides of a round interior wall, wherein the pair of cooling fluid inlets direct the cooling fluid horizontally toward the round interior wall such that inertia of the cooling fluid causes the cooling fluid to move in the same direction around the round interior wall.

According to the invention, the cooling system further includes a pressure equalization chamber adjacent the degassing chamber. The cooling system further includes a gas inlet for receiving a pressurized gas at a constant pressure. The cooling system further includes a moveable barrier separating the degassing chamber and the pressure equalization chamber for equalizing a pressure of the cooling fluid in the degassing chamber with the constant pressure of the pressurized gas in the pressure equalization chamber.

According to another aspect, the moveable barrier is a bellows.

According to another aspect, the moveable barrier is a flexible membrane.

According to an aspect, a method of degassing a cooling fluid in a vehicle cooling system includes receiving cooling fluid from a cooling fluid line at a cooling fluid inlet of a degassing system. The degassing system is located vertically below at least one radiator of the cooling system. The method further includes causing the gas to be separated from the cooling fluid in a degassing chamber. The method further includes returning the degassed cooling fluid to the cooling fluid line at a cooling fluid outlet of the degassing system. The method further includes venting the removed gas from the degassing chamber at a gas outlet of the degassing system.

### BRIEF DESCRIPTION OF THE DRAWINGS

The accompanying drawings, which are included to provide a further understanding of the disclosure and are incorporated in and constitute a part of this application, illustrate certain non-limiting embodiments of inventive concepts. In the drawings:
Figure 1 illustrates a diagram of a cooling system for a Fuel Cell Stack (FCS) vehicle including a degassing and pressure equalization system, according to some embodiments;
Figure 2 illustrates a degassing and pressure equalization system for a cooling system, according to some embodiments;
Figure 3 illustrates a cutaway view of the degassing and pressure equalization system of Figure 2, according to some embodiments; and
Figure 4 is a flowchart of operations for operating a degassing system for a cooling system, according to some embodiments.

### DETAILED DESCRIPTION OF EMBODIMENTS

Embodiments relate to vehicle cooling systems, and more particularly to a degassing system for a vehicle cooling system, such as a fuel cell stack (FCS) vehicle, and related systems, devices, and methods.

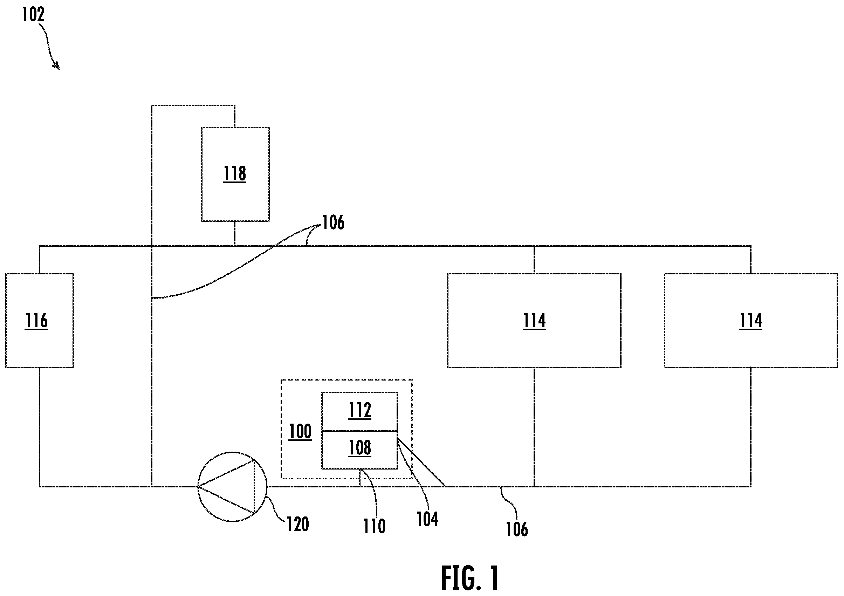

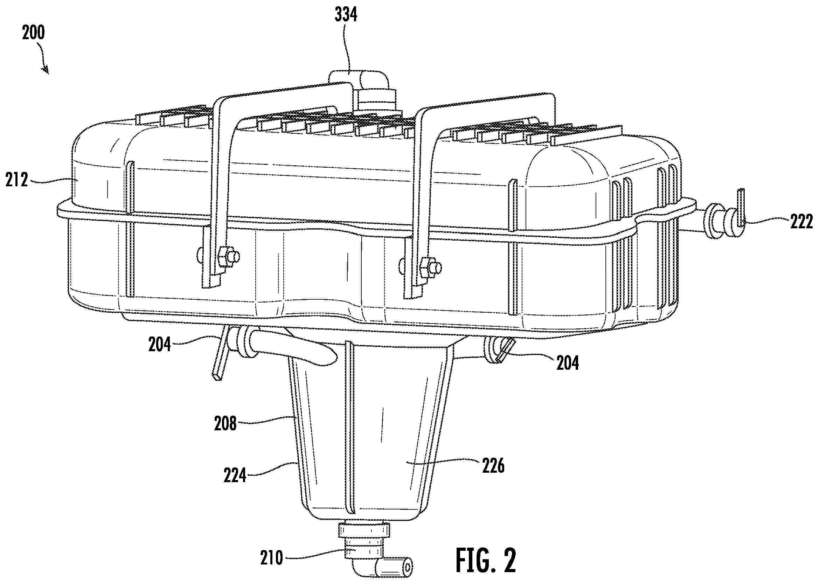

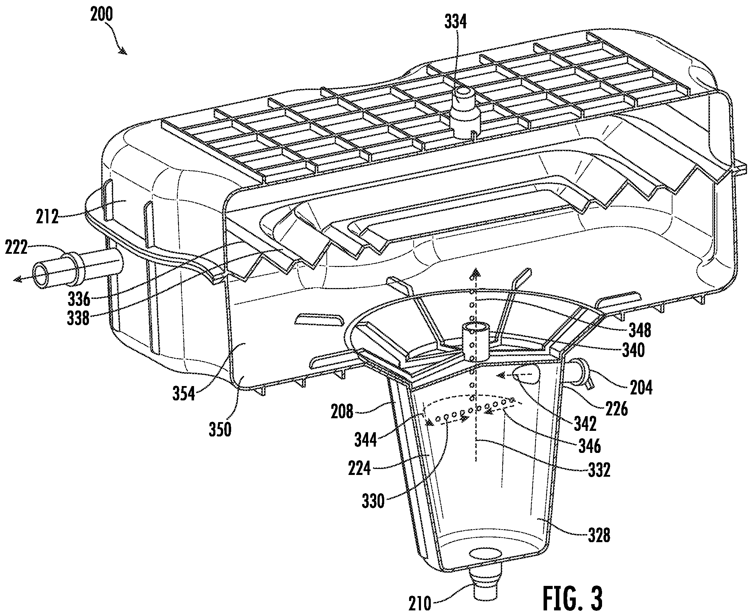

In this regard, Figure 1 illustrates a diagram of degassing system 100 for a cooling system 102, according to some embodiments. In this example, the cooling system 102 is a hydrogen fuel cell cooling system for a Fuel Cell Stack (FCS) vehicle, but it should be understood that embodiments described herein may be applicable to many different types of cooling systems. The cooling system 102 includes a plurality of cooling fluid lines 106 for transporting cooling fluid to and from various components of the cooling system 102, such as Hydrogen Fuel Cells (HFCs) 114, radiators 116, 118, etc. The degassing system 100 includes a cooling fluid inlet 104 for receiving cooling fluid from a cooling fluid line 106 of a vehicle cooling system. In this example, the cooling fluid is pressurized using a pump 120, but it should be understood that the cooling fluid may be pressurized in a number of different ways, as desired. The cooling fluid enters a degassing chamber 108 through the cooling fluid inlet 104. As will be described in greater detail with respect to Figures 2 and 3 below, the cooling fluid is degassed, i.e., gas is removed from the cooling fluid, by movement of the cooling fluid within the degassing chamber 108, which causes the gas to be separated from the cooling fluid. The degassed cooling fluid is returned to the cooling fluid line 106 via a cooling fluid outlet 110 and the removed gas is vented from the degassing chamber 108 via a gas outlet (by way of example, as shown in Figures 2 and 3 below).

The degassing system 100 in this example also includes a pressure equalization chamber (PEQ) 112. As will be described in greater detail with respect to Figures 2 and 3 below, the PEQ 112 is separated from the degassing chamber 108 by a flexible barrier that facilitates equalizing pressure between the degassing chamber 108 and the PEQ 112. In this example, the PEQ 112 is adjacent the degassing chamber 108, but it should be understood that the PEQ 112 may be a separate component from the degassing chamber 108 in some embodiments.

In this example, the degassing system 100 is located vertically below the radiators 116, 118 of the cooling system. As noted above, conventional passive degassing systems that rely on gravity to degas the cooling fluid typically position the degassing system vertically above the radiators and other components. However, many modern vehicle designs employ multiple radiators positioned in different locations. For example, Figure 1 illustrates a first radiator 116 located at a first, relatively low, location, such as in an engine bay of a semi-trailer truck, and a second radiator located as a second, higher location, such as above a truck cab of the truck. While positioning a conventional degassing system above the second radiator 116 may be inconvenient and/or impractical, those of ordinary skill in the art that this design constraint may be entirely avoided by employing aspects of the embodiment of Figure 1, which allows the degassing system 100 to be positioned independently of other components in the cooling system 102, and in particular at any position vertically within the cooling system 102, without negatively impacting performance of the degassing system 100.

Referring now to Figures 2 and 3, a degassing system 200 for a cooling system is illustrated, according to some embodiments. The degassing system 200 includes a degassing chamber 208 having a pair of cooling fluid inlets 204 for directing cooling fluid into the degassing chamber 208. In this example, the degassing chamber 208 is a swirl pot 226 having a round interior wall 224. The cooling fluid inlets 204 are disposed at opposite sides of the round interior wall 224 and direct the cooling fluid in a horizontal direction 342 toward the round interior wall 224 at a high flow rate to produce a vortex around the perimeter of the degassing chamber 208. In this example, the round interior wall 224 has a substantially circular cross-section, but it should be understood that other shapes may be used, such as an oval, ellipse, etc.. The round interior wall 224 in this example also forms a substantially frustoconical volume that tapers toward a cooling fluid outlet 210 to funnel degassed cooling fluid toward the cooling fluid outlet 210.

While this example includes a pair of cooling fluid inlets 204, it should also be understood that other configurations may be used, such as employing a single cooling fluid inlet, multiple cooling fluid inlets at different locations, etc.

As shown in greater detail in Figure 3, the cooling fluid inlets 204 are horizontally offset with respect to a center 332 of the degassing chamber 208, such that the cooling fluid is directed toward the round interior wall 224 at an angle that is substantially tangential, which directs the cooling fluid in a circular direction 342 around the round interior wall 224. The inertia of the cooling fluid causes the cooling fluid to move in the circular direction 342 around the round interior wall 224 so that the cooling fluid 328 presses against the round interior wall 224 as it travels around the outer perimeter of the degassing chamber 208. The inertia of cooling fluid 328 travelling around the outer perimeter of the degassing chamber 208 presses the cooling fluid 328 against the round interior wall 224 and generates a local pressure differential in a radial direction that causes bubbles of gas 330, which have a lower density than the cooling fluid to be displaced in an inward direction 346 toward a center 332 of the degassing chamber 208. At the same time, gravity also causes gas 330 to float upwardly toward the top of the degassing chamber 308 while the cooling fluid 328 is funneled down toward the cooling fluid outlet 210, where it is returned to the cooling system. In this embodiment, the displaced gas 330 next passes through an opening 340 disposed above the swirl pot 226 into a secondary chamber 350. Under normal operation, the swirl pot 226 and secondary chamber 350 are completely filled with cooling fluid, with the gas 330 passing through the opening 340 continue floating upward and collecting at the top of the secondary chamber 350. On reaching the top of the secondary chamber 350 the separated gas 330 is then vented through a gas outlet 222 into an exhaust system or directly into the atmosphere, as desired. In this example, the gas outlet 222 may include a valve to inhibit backflow of vented gas 330 or atmospheric gas into the secondary chamber 350. The valve may be passive, e.g., a float valve, or active, e.g., with a electrical or mechanical actuator that activates in response to a gas sensor detecting the presence of gas 330 in the secondary chamber 350, as desired.

In this example, a PEQ 212 is disposed adjacent the degassing chamber 208 to maintain the cooling fluid 328 in the cooling system 200 at a steady system pressure. In this example, the PEQ 212 and the secondary chamber 350 are connected adjacent to each other to form a unified component, but it should be understood that the PEQ may be a separate component in some embodiments and may be connected to a different part of the cooling system 200, as desired. In this example, forming the PEQ 212 and the secondary chamber 350 of the degassing system 208 as a single component may have the advantage of making the degassing system 200 more compact, to more efficiently utilize the limited internal space within the vehicle.

The PEQ 212 includes a gas inlet 334 for receiving a pressurized gas. For example, a compressor (not shown) may provide compressed air (or another pressurized gas or fluid) at a constant system pressure to the HFC stack (i.e., HFCs 114) to regulate power output from the HFC stack. The compressed air is also provided to the PEQ 212 via the gas inlet 334 and is maintained at the constant system pressure. The PEQ 212 is separated from the degassing chamber 208 by an impermeable flexible barrier 336, which allows the pressure of the pressurized gas to equalize with the pressure of the coolant without allowing oxidization of the coolant or cross-contamination of the coolant or pressurized gas. If the pressure of the cooling fluid 328 is too high, the cooling fluid 328 presses against the flexible barrier 336 and expands into the volume of the PEQ 212 until the cooling fluid pressure is equal to the regulated air pressure in the PEQ 212. If the pressure of the cooling fluid 328 is too low, the compressed air in the PEQ 212 presses against the flexible barrier into the volume of the secondary chamber 350 to compress the cooling fluid 328 to a pressure is equal to the regulated air pressure in the PEQ 212. For example, in some embodiments, the cooling fluid 328 in a vehicle cooling system can expand by 3-5 liters in volume due to thermal variation during normal operation. By providing a higher volume (e.g., 12 liters) PEQ 212 and a comparably sized secondary chamber 350, the PEQ 212 and secondary chamber 350 can accommodate this variation in fluid volume while maintaining the cooling fluid 328 in the cooling system 200 at a predetermined pressure.

In this example, the flexible barrier 336 includes a bellows 338 covering a top portion of the secondary chamber 350 of the degassing chamber 208. The PEQ 212 is disposed above the bellows 338, and the gas inlet 334 is disposed at a top of the PEQ 212. It should be understood, however, that other types of flexible or displaceable barriers may be used. For example, a flexible membrane, a bladder, and/or a movable piston, etc. may be used in place of the bellows 338 in some embodiments. Locating the secondary chamber 350 and gas outlet 222 above the cooling fluid inlets 204 may provide an additional advantage in this embodiment allowing the flexible barrier 336 or other separating element to be less robust and stiff, which in turn reduces a risk of introducing an undesirable hysteresis to the component.

The relatively large volume of the PEQ 212 allows the PEQ 212 to operate as an expansion tank to accommodate expansion and/or contraction of the cooling fluid throughout the cooling system 200 due to changes in temperature, ambient pressure, etc. The flexible barrier 336 moves accordingly to accommodate the expansion/contraction of the cooling fluid 328 and to equalize pressure between compressed air in the PEQ 212 and the cooling fluid 328 in the degassing system 100 and elsewhere in the cooling system 200, and to prevent any pressure build-up due to coolant expansion in the otherwise fixed volume of the degassing system 100 or elsewhere in the cooling system.

In this embodiment, the operation of the PEQ 212, which maintains the cooling fluid 328 at a steady pressure, is independent of the degassing operation caused by the vortex in the swirl pot 226. That is, the vortex of the cooling fluid 328 in the swirl pot 226 causes a local pressure differential in the swirl pot 226 that forces the air 330 toward the center of the swirl pot 226, but the overall system pressure for the cooling fluid 328 in the cooling system 200 is maintained and regulated by the PEQ 212. The gas outlet 222, which allows separated gas 330 to escape the degassing system 200, is also operated independently of the PEQ 212 in this embodiment. For example, the gas outlet 222 in this embodiment is configured to only operate to release the separated gas 330 from the cooling fluid and will otherwise remain closed to allow the pressure of the cooling fluid to remain equalized with the regulated pressure of the air in the PEQ 212.

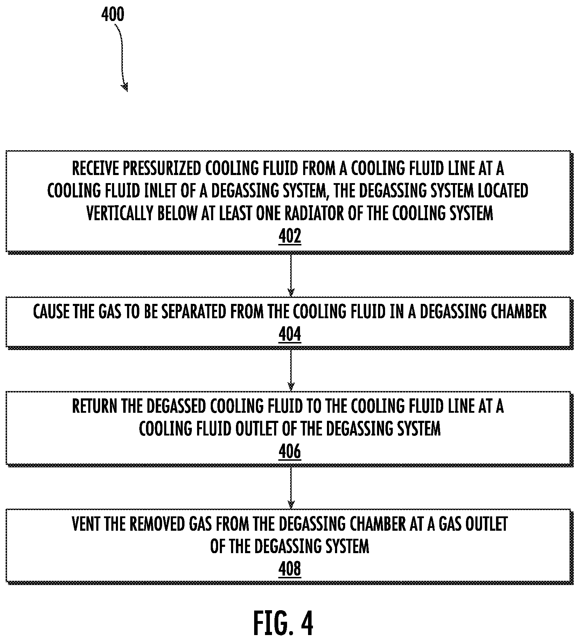

Figure 4 is a flowchart of operations 400 for operating a degassing system for a cooling system, according to some embodiments. The operations 400 include receiving cooling fluid from a cooling fluid line at a cooling fluid inlet of a degassing system (Block 402), such as the degassing systems 100, 200 of Figures 1-3. In this example, the degassing system is located vertically below at least one radiator of the cooling system.

The operations 400 further include causing the gas to be separated from the cooling fluid in a degassing chamber (Block 404), such as by the application of radial pressure against the cooling fluid by the swirl pot 226 arrangement of Figures 2 and 3. The operations 400 further include returning the degassed cooling fluid to the cooling fluid line at a cooling fluid outlet of the degassing system (Block 406), such as through the cooling fluid outlet 210 at the bottom of the degassing chamber 208 of Figures 2 and 3, and venting the removed gas from the degassing chamber at a gas outlet of the degassing system (Block 408), such as through the gas outlet 222 located above the cooling fluid inlets 204 of Figures 2 and 3. These and other embodiments address the technical limitations of conventional passive, gravity-based degassing systems by permitting a degassing system to be positioned in different parts of the cooling system. Unlike conventional degassing systems that are positioned at the highest point of the cooling system, embodiments of the present disclosure allow functional pressure equalization systems to be positioned below the radiators and other components of the cooling system, as desired. This allows for greater flexibility and efficiency in the design of cooling systems for vehicles and other applications.

## Claims

1. A degassing system (100) for a vehicle cooling system (102), the degassing system comprising:
a cooling fluid inlet (104) for receiving cooling fluid from a cooling fluid line (106) of a vehicle cooling system;
a degassing chamber (108) for degassing the cooling fluid to remove gas (330) from the cooling fluid, wherein movement of the cooling fluid within the degassing chamber causes the gas to be separated from the cooling fluid;
a cooling fluid outlet (110) for returning the degassed cooling fluid (328) to the cooling fluid line;
a gas outlet (222) for venting the removed gas from the degassing chamber;
**characterized in that** the degassing system (100) further comprises:
a pressure equalization chamber (212) adjacent the degassing chamber;
a gas inlet (334) for receiving a pressurized gas at a constant pressure; and
a flexible barrier (336) separating the degassing chamber and the pressure equalization chamber for equalizing a pressure of the cooling fluid in the degassing chamber with the constant pressure of the pressurized gas in the pressure equalization chamber.

2. The degassing system of claim 1, wherein the degassing chamber comprises a swirl pot (226) comprising:
a round interior wall (224), wherein the cooling fluid inlet directs the cooling fluid horizontally toward the round interior wall such that inertia of the cooling fluid causes the cooling fluid to move around the round interior wall in a vortex to press the cooling fluid against the round interior wall,
wherein the pressure of the cooling fluid against the round interior wall causes the gas to move toward a center of the degassing chamber.

3. The degassing system of claim 1, wherein the cooling fluid outlet is located vertically below the cooling fluid inlet.

4. The degassing system of claim 1, wherein the gas outlet is located above the cooling fluid inlet.

5. The degassing system of claim 1, wherein the cooling fluid inlet comprises a pair of cooling fluid inlets (204) disposed at opposite sides of a round interior wall, wherein the pair of cooling fluid inlets direct the cooling fluid horizontally toward the round interior wall such that inertia of the cooling fluid causes the cooling fluid to move in the same direction around the round interior wall.

6. The degassing system of claim 1, wherein the vehicle cooling system comprises a hydrogen fuel cell (114) cooling system.

7. The degassing system of claim 1, wherein the flexible barrier is a bellows (336).

8. The degassing system of claim 1, wherein the flexible barrier is a flexible membrane (334).

9. A method (400) of degassing a cooling fluid in a vehicle cooling system comprising a degassing system (100) according to claim 1, the method comprising:
receiving cooling fluid from a cooling fluid line at the cooling fluid inlet of the degassing system, the degassing system located vertically below at least one radiator of the cooling system (402);
causing gas to be separated from the cooling fluid in the degassing chamber (404);
returning the degassed cooling fluid to the cooling fluid line at the cooling fluid outlet of the degassing system (406); and
venting the removed gas from the degassing chamber at the gas outlet of the degassing system (408).

## Patentansprüche

1. Entgasungssystem (100) für ein Fahrzeugkühlsystem (102), wobei das Entgasungssystem Folgendes umfasst:
einen Kühlfluideinlass (104) zum Empfangen eines Kühlfluids von einer Kühlfluidleitung (106) eines Fahrzeugkühlsystems;
eine Entgasungskammer (108) zum Entgasen des Kühlfluids, um ein Gas (330) aus dem Kühlfluid zu entfernen, wobei eine Bewegung des Kühlfluids innerhalb der Entgasungskammer das Gas dazu veranlasst, von dem Kühlfluid getrennt zu werden;
einen Kühlfluidauslass (110) zum Zurückführen des entgasten Kühlfluids (328) zu der Kühlfluidleitung;
einen Gasauslass (222) zum Ablassen des entfernten Gases aus der Entgasungskammer; **dadurch gekennzeichnet, dass** das Entgasungssystem (100) ferner Folgendes umfasst:
eine Druckausgleichskammer (212), die benachbart zu der Entgasungskammer ist;
einen Gaseinlass (334) zum Empfangen eines druckbeaufschlagten Gases bei einem konstanten Druck; und
eine flexible Sperre (336), welche die Entgasungskammer und die Druckausgleichskammer zum Ausgleichen eines Druckes des Kühlfluids in der Entgasungskammer mit dem konstanten Druck des druckbeaufschlagten Gases in der Druckausgleichskammer trennt.

2. Entgasungssystem nach Anspruch 1, wobei die Entgasungskammer einen Entlüftungsbehälter (226) umfasst, umfassend:
eine runde Innenwand (224), wobei der Kühlfluideinlass das Kühlfluid derart horizontal in Richtung der runden Innenwand leitet, dass eine Trägheit des Kühlfluids das Kühlfluid dazu veranlasst, sich in einem Wirbel um die runde Innenwand zu bewegen, um das Kühlfluid gegen die runde Innenwand zu pressen, wobei der Druck des Kühlfluids gegen die runde Innenwand das Gas dazu veranlasst, sich in Richtung eines Zentrums der Entgasungskammer zu bewegen.

3. Entgasungssystem nach Anspruch 1, wobei sich der Kühlfluidauslass vertikal unter dem Kühlfluideinlass befindet.

4. Entgasungssystem nach Anspruch 1, wobei sich der Gasauslass über dem Kühlfluideinlass befindet.

5. Entgasungssystem nach Anspruch 1, wobei der Kühlfluideinlass ein Paar von Kühlfluideinlässen (204) umfasst, das an gegenüberliegenden Seiten einer runden Innenwand angeordnet ist, wobei das Paar von Kühlfluideinlässen das Kühlfluid derart horizontal in Richtung der runden Innenwand leitet, dass eine Trägheit des Kühlfluids das Kühlfluid dazu veranlasst, sich in der gleichen Richtung um die runde Innenwand zu bewegen.

6. Entgasungssystem nach Anspruch 1, wobei das Fahrzeugkühlsystem ein Kühlsystem mit Wasserstoffbrennstoffzelle (114) umfasst.

7. Entgasungssystem nach Anspruch 1, wobei die flexible Sperre ein Balg (336) ist.

8. Entgasungssystem nach Anspruch 1, wobei die flexible Sperre eine flexible Membran (334) ist.

9. Verfahren (400) zum Entgasen eines Kühlfluids in einem Fahrzeugkühlsystem, umfassend ein Entgasungssystem (100) nach Anspruch 1, wobei das Verfahren Folgendes umfasst:
Empfangen des Kühlfluids von einer Kühlfluidleitung an dem Kühlfluideinlass des Entgasungssystems, wobei sich das Entgasungssystem vertikal unter mindestens einem Radiator des Kühlsystems (402) befindet;
Veranlassen, dass ein Gas in der Entgasungskammer (404) von dem Kühlfluid getrennt wird;
Zurückführen des entgasten Kühlfluids zu der Kühlfluidleitung an dem Kühlfluidauslass des Entgasungssystems (406); und
Ablassen des entfernten Gases aus der Entgasungskammer an dem Gasauslass des Entgasungssystems (408).

## Revendications

1. Système de dégazage (100) pour un système de refroidissement de véhicule (102), le système de dégazage comprenant :
une entrée de fluide de refroidissement (104) pour recevoir un fluide de refroidissement à partir d'une conduite de fluide de refroidissement (106) d'un système de refroidissement de véhicule ;
une chambre de dégazage (108) pour dégazer le fluide de refroidissement afin de retirer du gaz (330) du fluide de refroidissement, dans lequel le mouvement du fluide de refroidissement à l'intérieur de la chambre de dégazage amène le gaz à être séparé du fluide de refroidissement ;
une sortie de fluide de refroidissement (110) pour renvoyer le fluide de refroidissement dégazé (328) vers la conduite de fluide de refroidissement ;
une sortie de gaz (222) pour évacuer le gaz retiré de la chambre de dégazage ; **caractérisé en ce que** le système de dégazage (100) comprend en outre :
une chambre d'équilibrage de pression (212) adjacente à la chambre de dégazage ;
une entrée de gaz (334) pour recevoir un gaz sous pression à une pression constante ; et
une barrière flexible (336) séparant la chambre de dégazage et la chambre d'équilibrage de pression pour équilibrer une pression du fluide de refroidissement dans la chambre de dégazage avec la pression constante du gaz sous pression dans la chambre d'équilibrage de pression.

2. Système de dégazage selon la revendication 1, dans lequel la chambre de dégazage comprend un pot de tourbillonnement (226) comprenant :
une paroi intérieure ronde (224), dans lequel l'entrée de fluide de refroidissement dirige le fluide de refroidissement horizontalement vers la paroi intérieure ronde de telle sorte qu'une inertie du fluide de refroidissement amène le fluide de refroidissement à se déplacer autour de la paroi intérieure ronde dans un vortex pour presser le fluide de refroidissement contre la paroi intérieure ronde,
dans lequel la pression du fluide de refroidissement contre la paroi intérieure ronde amène le gaz à se déplacer vers un centre de la chambre de dégazage.

3. Système de dégazage selon la revendication 1, dans lequel la sortie de fluide de refroidissement est située verticalement en dessous de l'entrée de fluide de refroidissement.

4. Système de dégazage selon la revendication 1, dans lequel la sortie de gaz est située au-dessus de l'entrée de fluide de refroidissement.

5. Système de dégazage selon la revendication 1, dans lequel l'entrée de fluide de refroidissement comprend une paire d'entrées de fluide de refroidissement (204) disposées sur des côtés opposés d'une paroi intérieure ronde, dans lequel la paire d'entrées de fluide de refroidissement dirigent le fluide de refroidissement horizontalement vers la paroi intérieure ronde de sorte qu'une inertie du fluide de refroidissement amène le fluide de refroidissement à se déplacer dans la même direction autour de la paroi intérieure ronde.

6. Système de dégazage selon la revendication 1, dans lequel le système de refroidissement de véhicule comprend un système de refroidissement de pile à combustible à hydrogène (114).

7. Système de dégazage selon la revendication 1, dans lequel la barrière flexible est un soufflet (336).

8. Système de dégazage selon la revendication 1, dans lequel la barrière flexible est une membrane flexible (334).

9. Procédé (400) de dégazage d'un fluide de refroidissement dans un système de refroidissement de véhicule comprenant un système de dégazage (100) selon la revendication 1, le procédé comprenant :
la réception d'un fluide de refroidissement à partir d'une conduite de fluide de refroidissement au niveau de l'entrée de fluide de refroidissement du système de dégazage, le système de dégazage étant situé verticalement en dessous d'au moins un radiateur du système de refroidissement (402) ;
le fait d'amener le gaz à être séparé du fluide de refroidissement dans la chambre de dégazage (404) ;
le renvoi du fluide de refroidissement dégazé vers la conduite de fluide de refroidissement au niveau de la sortie de fluide de refroidissement du système de dégazage (406) ; et
l'évacuation du gaz retiré depuis la chambre de dégazage au niveau de la sortie de gaz du système de dégazage (408).
